(19) Europäisches Patentamt

European Patent Office

Office européen des brevets

(11) Veröffentlichungsnummer: **0 289 898**

**A1**

(12) **EUROPÄISCHE PATENTANMELDUNG**

(21) Anmeldenummer: 88106578.3

(22) Anmeldetag: 25.04.88

(51) Int. Cl.⁴: **D01H 7/882 , F16C 25/06 , F16C 35/06 , F16C 35/12**

(30) Priorität: 08.05.87 CH 1766/87

(43) Veröffentlichungstag der Anmeldung:
09.11.88 Patentblatt 88/45

(84) Benannte Vertragsstaaten:
CH DE FR GB IT LI

(71) Anmelder: **MASCHINENFABRIK RIETER AG**
**Postfach 290**
**CH-8406 Winterthur(CH)**

(72) Erfinder: **Rohrer, Reinhard**
**Schützengasse 68**
**CH-2502 Biel(CH)**
Erfinder: **Buerki, Henri**
**Feldschützenweg 6a**
**CH-2504 Biel(CH)**
Erfinder: **Bischofberger, Jürg**
**Carl Spittelerstrasse 7**
**CH-8352 Elsau(CH)**
Erfinder: **Frey, Raymond**
**Birmensdorferstrasse 331**
**CH-8055 Zürich(CH)**

(54) **Rotationslager für hohe Geschwindigkeiten.**

(57) Das Rotationslager (11) für hohe Geschwindigkeiten besteht aus einem Gehäuse (12) und einer in diesem, auf einem ersten und einem zweiten Kugellager (14,23), gelagerten Welle (13). Mindestens das erste Kugellager (14) ist ein Radial-Schulterkugellager. Jedes Kugellager (14, 23) umfasst eine auf der Welle (13) selbst gebildete erste und zweite Laufrille (15 bzw. 24) und einen ersten und zweiten Aussenring (16 bzw. 25). Je eine Laufrille (15,24) und je ein Aussenring (16,25) bilden die Bahnen für die Lagerkugeln (17). Die Aussenringe (16,25) befinden sich in hohlzylindrisch geformten und durch das Gehäuse 12 gebildeten Sitzen (20,28).

Gemäss der Erfindung befindet sich der erste, im montierten Zustand fixierte Aussenring (16), in einem als Schiebesitz ausgebildeten Sitz (20), dessen Bemessung bei im Sitz (20) eingeführtem, nicht fixiertem Aussenring (16) eine in axialer Richtung praktisch kräftefreie Hin-und Herbewegung des Aussenringes (16) gestattet.

Das erfindungsgemässe Rotationslager 11 hat die Vorteile, dass auch bei höchsten Tourenzahlen Vibrationen und übermässige Abnützungserscheinungen vermieden sind und eine lange Lebensdauer des Lagers 11 erhalten wird. Schwierigkeiten wegen Unwuchtproblemen und der Stabilität der Form der Welle sind vermieden.

Fig. 1

## ROTATIONSLAGER FUER HOHE GESCHWINDIGKEITEN

Die vorliegende Erfindung bezieht sich auf ein Rotationslager für hohe Geschwindigkeiten von der im Oberbegriff des Patentanspruchs 1 definierten Art.

Solche Lager sind beispielsweise aus der deutschen Auslegeschrift Nr. 2 13 905 oder aus der - schweizerischen Patentschrift Nr. 514 796 bekannt. Ein wichtiges Anwendungsgebiet derselben ist deren Verwendung zum Antreiben von Spinnzentrifugen bei Offenend-Spinnmaschinen. Dabei können bis zu 100'000 Umdrehungen pro Minute vorkommen.

Da man unter solchen Verhältnissen bestrebt ist, die Umfangsgeschwindigkeit der Kugeln in den Kugellagern möglichst klein zu halten, werden in der Welle selber Laufrillen angebracht, welche die Innenringe von Kugellagern bilden, in denen die Kugeln laufen. Aus diese Weise ist der von den Kugeln pro Umlauf zurückzulegende Weg ein Minimum.

Es hat sich gezeigt, dass bei diesen bekannten Einrich tungen Vibrationen und übermässige Abnützungen auftreten können, welche eine ungenügende Lebensdauer dieser Lager bewirken. Diese Nachteile entstehen, wenn die geforderte, grosse Genauigkeit der Einzelteile nicht genau eingehalten wird. Insbesondere müssen der Abstand der auf der Welle angebrachten Laufrillen für die Lagerkugeln und der gegenseitige Abstand der Lageraussenringe äusserst genau aufeinander abgestimmt sein. Dies bedingt, dass die Länge der bei den oben erwähnten, bekannten Einrichtungen verwendeten Distanzbüchsen, an welche die Aussenringe anliegen, sehr genau bemessen sein muss, was aber in der Praxis mit Schwierigkeiten verbunden ist.

Gemäss der deutschen Offenlegungsschrift DE 36 05 274 A1 sollen höchste Drehzahlen eines Lagers durch eine Konstruktion erreicht werden, bei welcher die Welle aus zwei Teilen besteht, welche in eine Buchse eingeschoben und auf diese Weise zusammengehalten werden. Durch Verändern des gegenseitigen Abstands der beiden Teile in axialer Richtung kann der gewünschte Abstand der Laufrillen für die Lagerkugeln eingestellt werden. Bei dieser Ausführungsform ist jedoch die durch Einklemmen der zwei relativ schweren Wellenteile in der Buchse sich ergebende Geradlinigkeit der Welle ungenügend, was bei den vorkommenden, enormen Rotationsgeschwindigkeiten zu Schwierigkeiten führt. Die notwendige, genaue Einstellbarkeit ist nicht gewährleistet, und es ergeben sich Schwierigkeiten wegen Auswuchtproblemen.

Die im Vorherigen aufgeführten Nachteile sollen gemäss vorliegender Erfindung vermieden werden. Diese weist die im kennzeichnenden Teil des Patentanspruchs 1 aufgeführten Merkmale auf.

Die vorliegende Erfindung bezieht sich ausserdem auf ein Verfahren zum Herstellen eines - schnell laufenden Rotationslagers. Die Merkmale dieses Verfahrens sind im Patentanspruch 6 aufgeführt.

Bei der erfindungsgemässen Anordnung ist der erste Aussenring, bevor er mit dem Gehäuse des ersten Rotationslagers fixiert wird, zum Zweck seiner Einstellung in einem Schiebesitz in axialer Richtung leicht gleitend verschiebbar gelagert. Dadurch kann das Anschlagen dieses Aussenrings an den Kugeln der ersten Laufrille praktisch kräftefrei durchgeführt und damit die Position des Aussenringes beim Anschlag sehr genau festgestellt werden, wobei nur ein vorgegebener, praktisch unmerklicher Anlagedruck auf die Kugeln ausgeübt werden muss. Auf diese Weise sind die beiden Kugellager nach dem Fixieren des zweiten Aussenringes äusserst genau eingestellt.

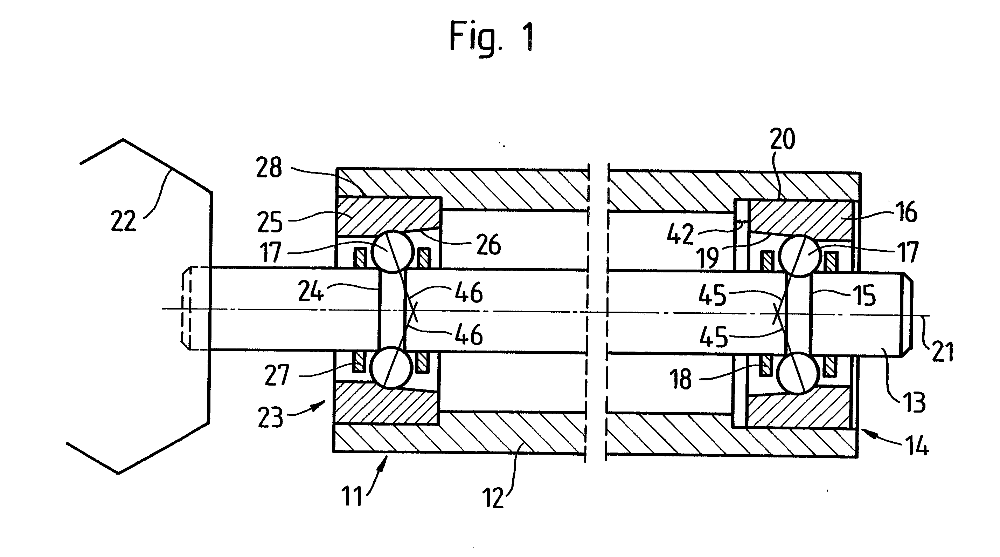

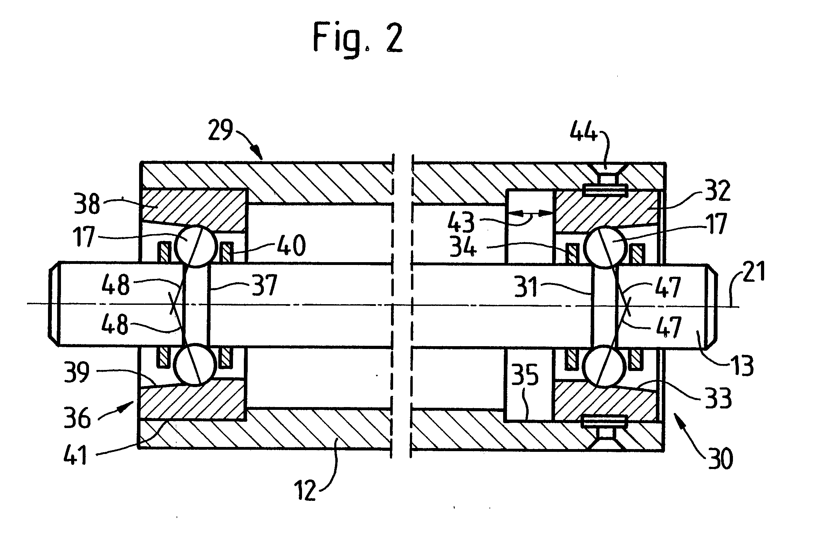

Die Erfindung sei nun anhand zweier Ausführungsbeispiele und der Figuren 1 und 2 der Zeichnung näher erläutert. Diese sind Längsschnitte durch die erfindungsgemässen Rotationslager.

Das in Fig. 1 gezeigte Rotationslager 11 weist ein Gehäuse 12 und eine Welle 13 auf. Die Letztere ist in einem ersten Kugellager, dem Radial-Schulterkugellager 14, rotierbar gelagert. Das Kugellager 14 umfasst eine erste Laufrille 15, welche auf der Welle 13 selbst geformt ist. Es umfasst zudem einen ersten Aussenring 16, welcher auf Lagerkugeln 17 aufgesetzt ist. Die Kugeln 17 sind in einem ersten, geschlossenen Käfig 18 geführt. Der Aussenring 16 befindet sich in einem Sitz 20, welcher durch das Gehäuse 12 gebildet ist. Mit 21 ist die Achse des Rotations lagers 11 bezeichnet, welche mit der Achse des Gehäuses 12 und der Welle 13 identisch ist. Die Innenfläche 19 des Aussenringes 16 besitzt eine sich in axialer Richtung gegen die Mitte des Rotationslagers 11 hin konisch erweitende Form. Bei der Verwendung des Rotationslagers 11 für das Offenend-Spinnen ist am einen Ende der Welle 13 ein Spinnrotor 22 angebracht. Die Welle 13 ist zusätzlich in einem zweiten Kugellager 23, das ebenfalls ein Radial-Schulterkugellager 23 sein kann, aber ein solches nicht sein muss, gelagert. Dessen Ausgestaltung ist derjenigen des Kugellagers 14 praktisch gleich. Das Lager 23 weist eine zweite, auf der Welle 13 selbst angebrachte Laufrille 24, einen zweiten Aussenring 25 mit einer Innenfläche 26 und einen zweiten, geschlossenen Käfig 27 mit Lagerkugeln 17 auf. Der Aussenring 25 befindet sich in einem durch das Gehäuse 12 gebildeten Sitz 28.

Fig. 2 zeigt wiederum ein Rotationslager 29, welches ein Gehäuse 12 und eine Welle 13 umfasst. Zudem weist es wiederum ein als Radial-Schulterkugellager ausgebildetes Kugellager 30 auf, welches eine erste Laufrille 31, einen ersten Aussenring 32 mit einer konisch geformten Innenfläche 33 und einen ersten Käfig 34 mit Lagerkugeln 17 umfasst. Der Sitz 35 für den Aussenring 32 besteht wiederum aus einem durch das Gehäuse 12 gebildeten Hohlzylinder. Das zweite Kugellager 36, welches wiederum als Radial-Schulterkugellager ausgebildet sein kann, aber ein solches nicht sein muss, umfasst eine zweite Laufrille 37, einen zweiten Aussenring 38 mit einer konisch geformten Innenfläche 39 und einen zweiten geschlossenen Käfig 40 zum Führen der Lagerkugeln 17. Der Sitz für den Aussenring 38 des Lagers 36 ist mit der Bezugszahl 41 bezeichnet. Im Gegensatz zum Beispiel der Fig. 1 sind in Fig. 2 die Innenflächen 33, 39 der Aussenringe 32, 38 in axialer Richtung nach aussen hin, von der Mitte des Rotationslagers 29 weg, von im wesentlichen sich erweiternder Form.

Im Betrieb des Rotationslagers für sehr hohe Umdrehungszahlen ist es, wie eingangs erwähnt, vor allem wichtig, dass, unter Bezugnahme auf Fig. 1, die Kugeln 17 genau in den Laufrillen 15, 24 herumlaufen und gleichzeitig genau an die Aussenringe 16, 25 anliegen. Dabei dürfen die Kugeln einerseits ein höchstens minimales Laufspiel haben und andererseits . aber auch nicht klemmen. Gemäss der Erfindung wird dies insbesondere durch die Verwendung der in Fig. 1 und 2 gezeigten Radial-Schulterkugellager 14 und 30 und die Herstellungsart der erfindungsgemässen Rotationslager 11, 29 erreicht.

Im Fall des Beispiels gemäss Fig. 1 wird beim Herstellungsverfahren zuerst der zweite Aussenring 25 in den Sitz 28 eingeschoben, bis er am gegen die Mitte des Rotationslagers 11 liegenden Ende des Sitzes 28 anstösst, und dann wird er mit dem Gehäuse 12 fixiert. Daraufhin wird die Welle 13 mit den auf ihr angebrachten Laufrillen 15 und 24, gemäss Fig. 1 von rechts her, ins Gehäuse 12 eingeführt. Dabei ist der zweite Käfig 27 mit den Lagerkugeln 17 über der Rille 24 bereits auf die Welle 13 aufgesetzt.

Als Nächstes wird der erste Käfig 18 mit den ihm zugeordneten Kugeln 17 über die Welle 13 geschoben, wobei die Kugeln 17 genau über die Laufrille 15 zu liegen kommen. Anschliessend wird der Aussenring 16 über die Welle 13 geschoben. Es ist sehr wichtig, dass der Aussenring 16 genau in den Sitz 20 hineinpasst und dass er in diesem einer praktisch kräftefreien Hin-und Herbewegung in axialer Richtung (d.h. bezüglich der Achse 21) fähig ist. Der Aussenring 16 wird nun in praktisch kräftefreier Weise in axialer Richtung gegen die Mitte des Rotationslagers 11 geschoben, bis er mit seiner Innenfläche 19 mit einem leichten, vorbestimmten Anlagedruck an die Kugeln 17 des Käfigs 18 anstösst. Bei diesem praktisch kräftefreien Schieben kann schon bei ganz schwachem Anstossen das Schieben angehalten werden, sodass die Positionierung des Aussenringes 16 mit äusserster Genauigkeit festgelegt wird. Daraufhin wird der Aussenring 16 am Gehäuse 12, beispielsweise ebenfalls durch Kleben, fixiert.

Um sicher zu gehen, dass man zum Anschlag an die Kugeln 17 des Käfigs 18 gelangt, und nicht irrtümlicherweise am gegen die Mitte des Rotationslagers 11 gelegenen Ende des Sitzes 20 anstösst, wird der Sitz 20 in seiner axialen Ausdehnung in der Weise bemessen, dass die Hin-und Herbewegung des Aussenringes 16 über die Position des Anschlags an die Kugeln 17 hinaus möglich ist, d.h. über die Stelle hinweg, die vom Aussenring 16 in seiner fixierten Stellung eingenommen wird. Anders ausgedrückt, es wird ein Montagespiel 42 vorgesehen.

Im Betrieb des Rotationslagers 11 erwärmt sich im allgemeinen die Welle 13 mehr als das Gehäuse 12, was bei einer vollkommen laufspielfreien Einstellung ein Klemmen der Kugeln 17 bedingen würde. Ein solches ist jedoch unzulässig. Es wird deshalb im allgemeinen erforderlich sein, nach dem Verschieben des Aussenringes 16 bis zum Anschlag an die Kugeln 17, den Aussenring 16 um einen kleinen Betrag wieder zurückzubewegen, der so bemessen ist, dass das dadurch entstandene Laufspiel bei der Betriebstemperatur des Rotationslagers 11 gerade wieder aufgehoben ist.

Das Rotationslager 29 der Fig. 2 unterscheidet sich von dem der Fig. 1 vor allem dadurch, dass die Innenflächen 33, 39 der Radial-Schulterkugellager 30, 36 eine sich in axialer Richtung von der Mitte des Rotationslagers 29 weg nach aussen hin, konisch erweiternde Form aufweisen.

Für den Zusammenbau des Rotationslagers 29 wird wiederum zuerst der Ring 38 fixiert. Dann wird die Welle 13 mit aufgesetztem Käfig 40 und Kugeln 17 von rechts ins Gehäuse 12 eingeschoben. Dabei wird die Welle 13 mit den auf der Laufrille 37 aufsitzenden Kugeln 17 bis zur Anlage der letztern an der Innenfläche 39, im Gehäuse 12 in axialer Richtung nach rechts verschoben. Anschliessend wird der Aussenring 32 über die Welle 13 und in den Sitz 35 eingeschoben und der Käfig 34, mit seinen Kugeln 17 genau über der Laufrille 31, über der Welle 13 angebracht.

Schliesslich wird der Aussenring 32 gemäss Fig. 2 nach rechts, d.h. in axialer Richtung von der Mitte des Rotationslagers 29 weg, bewegt, bis dessen Innenfläche 33 zum Anschlag an die Kugeln 17 kommt. Dabei muss wiederum eine praktisch kräftefreie Hin-und Herbewegung des Aussenringes 32 im Sitz 35 möglich sein. Auch das Anstossen des Aussenringes 32 an die Kugeln 17 muss mit leichtem, vorgegebenem Anlagedruck erfolgen, und die Bewegungen des Ringes 32 sind vorteilhafterweise beim Anschlagen an die Kugeln 17 durch eine empfindliche Reaktion sofort angehalten. Nachdem auf diese Weise die genaue Position des Aussenringes 32 festgelegt ist, wird der letztere mit dem Gehäuse fixiert. Dies kann wiederum z.B. durch Kleben oder durch Spritzen von Kunststoff oder Metall, gegebenenfalls unter zusätzlicher Verwendung von Ultraschall, erfolgen. Das Fixieren durch Spritzen ist schematisch durch eine Einfüllanordnung 44 veranschaulicht.

Im Ausführungsbeispiel der Fig. 2 ist ein relativ grosses Montagespiel 43 vorgesehen. Dies ist deshalb der Fall, weil beim Ueberschieben des Käfigs 34 über die Welle 13 die Entfernung der Kugeln 17 von der Achse 21 grösser ist als wenn sich die Kugeln 17 genau über der Laufrille 31 befinden. Um das Ueberschieben des Käfigs 34 mitsamt den Kugeln 17 unter allen Umständen zu ermöglichen, ist es deshalb notwendig, den Aussenring 32 in genügendem Mass nach der Mitte des Rotationslagers 29 verschieben zu können, d.h. ein relativ grosses Montagespiel 43 vorzusehen.

In bezug auf die über die Wärmeausdehnung im Zusammenhang mit der Fig. 1 gemachten Betrachtungen ist ersichtlich, dass im Fall der Fig. 2 ein Klemmen der Lagerkugeln 17 wegen der Erwärmung im Betrieb nicht eintritt. Als Folge der stärkeren Ausdehnung der Welle 13 im Vergleich zum Gehäuse 12 wird höchstens ein gewisses Laufspiel entstehen. Im Beispiel der Fig. 1 ist das Bewegen des Aussenringes 16 im Sitz 20 zum Zwecke der Positionierung wegen der einfacheren Zugänglichkeit im Vergleich zur Ausführungsform nach Fig. 2 einfacher. Damit besitzt die Ausführungsform der Fig. 1 im Vergleich zu der der Fig. 2 die Vorteile der einfacheren Herstellung und der genaueren Einstellbarkeit des Laufspiels der Kugeln 17 im Betriebszustand, während die Ausführungsform nach Fig. 2 den Vorteil aufweist, dass ein Klemmen der Kugeln 17 unter allen Umständen vermieden ist.

Die Ausführungsform gemäss Fig. 2 besitzt noch den weiteren Vorteil, dass sie, im Vergleich zur Ausführungsform der Fig. 1, höhere mechanische Belastungen aufzunehmen imstande ist. Dies folgt aus folgender Betrachtung: Die zwischen den Aussenringen 16, 25 und 32, 38 und den Kugeln 17 wirkenden Kräfte, die beispielsweise durch den Spinnrotor 22 verursacht sein können, sind in den durch die Geraden 45, 46, 47 und 48 gegebenen Richtungen gerichtet. Jede der Geraden 45, 46, 47, 48 verläuft vom Auflagepunkt einer Kugel 17 auf der entsprechenden Innenfläche 19, 26, 33, 39 zu einem Schnittpunkt der Geraden 45, 46, 47, 48 mit der Achse 21. Die einen grösseren gegenseitigen Abstand aufweisenden Schnittpunkte des Beispiels der Fig. 2 sind der Grund der grösseren Tragfähigkeit des Rotationslagers 29 im Vergleich mit dem Lager 11.

## Ansprüche

1. Rotationslager für hohe Geschwindigkeiten, bestehend aus einem Gehäuse (12), aus einer in diesem rotierbar gelagerten Welle (13), die eine erste (15,31) und eine zweite (24,37) Laufrille für die Kugeln (17) eines ersten (14,30) und eines zweiten (23,36) Kugellagers aufweist, aus zum ersten (14,30) und einem zum zweiten (23,36) Kugellager gehörenden, die Kugeln (17) führenden, geschlossenen ersten (18,34) und zweiten (27,40) Käfig und aus einem zum ersten (14,30) und einem zum zweiten (23, 36) Kugellager gehörenden ersten (16,32) und zweiten (25,38) Aussenring, wobei die Aussenringe (16,32; 25,38) sich je in einem hohlzylindrisch geformten, mit der Rotationslagerachse (21) koaxialen und durch das Gehäuse (12) gebildeten ersten (20,35) bzw. zweiten (28,41) Sitz befinden,
dadurch gekennzeichnet,
dass mindestens das erste Kugellager (14,30) als Radial-Schulterkugellager ausgebildet ist und dass der erste, im montierten Zustand fixierte Aussenring (16,32) im, als Schiebesitz ausgebildeten, ersten Sitz (20,35) eingesetzt ist, dessen Bemessungen bei in diesen Sitz (20,35) eingeführtem, nicht fixiertem Aussenring (16,32) eine praktisch kräftefreie Hin-und Herbewegung des Aussenrings (16,32) in axialer Richtung über die Stelle hinweg, die von diesem Aussenring (16,32) in seiner fixierten Arbeitsstellung eingenommen ist, gestattet.

2. Rotationslager nach Anspruch 1,
dadurch gekennzeichnet,
dass die beiden Kugellager (14,23) als Radial-Schulterkugellager ausgebildet sind und bei jedem derselben die Innenfläche (19,26) des Aussenrings (16, 25), in axialer Richtung und bezüglich des Rotationslager (11) gegen die Mitte hin, konisch geöffnet ist und durch geeignet gewählte Positionierung des ersten Aussenrings (16) in axialer Richtung, die Kugeln (17) der Kugellager (14,23) ein Laufspiel aufweisen, das bei Betriebstemperatur praktisch aufgehoben ist (Fig. 1).

3. Rotationslager nach Anspruch 1,
dadurch gekennzeichnet,
dass die beiden Kugellager (30,36) als Radial-Schulterkugellager ausgebildet sind und bei jedem derselben die Innenfläche (33,39) des Aussenringes (32, 38) in axialer Richtung und bezüglich des Rotationslagers (29) nach aussen hin, konisch geöffnet ist, wobei die zwischen den Aussenringen (32,38) und den Kugeln (17) wirkenden Kräfte längs Geraden (47,48) verlaufen, welche die Wellenachse (21) in Punkten schneiden, die bezüglich der Auflagestellen der Kugeln (17) an den Innenflächen (33,39), sich in axialer Richtung im Rotationslager weiter aussen befinden (Fig. 2).

4. Rotationslager nach Anspruch 1,
dadurch gekennzeichnet,
dass mindestens der erste Aussenring (16,32) durch Kleben oder durch einen Spritzvorgang mittels Kunststoff oder Metall mittels einer Einfüllanordnung (44) mit dem Gehäuse (12) fixiert ist.

5. Rotationslager nach Anspruch 3,
dadurch gekennzeichnet,
dass der erste Aussenring (32) mit einem Mittel zum Ergreifen und zum Bewegen desselben in bezüglich des Rotationslagers (29) axialer Richtung nach aussen ausgestattet ist.

6. Verfahren zum Herstellen eines schnell laufenden Rotationslagers nach Anspruch 1, welches durch die Schritte gekennzeichnet ist:

a) Fixieren des zweiten Aussenrings (25,38) mit dem Gehäuse (12),

b) Aufsetzen des ersten Käfigs (18) mit den zu diesem gehörenden Kugeln (17) auf die erste Laufrille (15) und Ueberschieben des ersten Aussenringes (16) über die Welle (13) und Einführen desselben in den ersten Sitz (20), oder Ueberschieben des ersten Aussenringes (32) über die Welle (13) und Einführen desselben in den ersten Sitz (35) und Aufsetzen des ersten Käfigs (34) mit den zu diesem gehörenden Kugeln (17) auf der ersten Laufrille (31),

c) Verschieben des ersten Aussenringes (16,32) in praktisch kräftefreier Weise bis zu dessen Anschlag an die Kugeln (17) auf der ersten Laufrille (15,31) mit einem vorbestimmten Anlagedruck und

d) Fixieren des ersten Aussenringes (16,32) am Gehäuse (12).

7. Verfahren nach Anspruch 6,
dadurch gekennzeichnet,
dass die beiden Kugellager (14,23) als Radial-Schulterkugellager ausgebildet werden,
dass bei beiden Aussenringen (16,25) bezüglich des Rotationslagers (11) nach innen öffnende Innenflächen (19,26) der Aussenringe (16,25) vorgesehen werden und,
dass beim Verfahrensschritt b) zuerst der mit Lagerkugeln (17) versehene, erste Käfig (18) und nachfolgend der erste Aussenring (16) auf die Welle (13) aufgesetzt werden (Fig. 1).

8. Verfahren nach Anspruch 6,
dadurch gekennzeichnet,
dass die beiden Kugellager (30,36) als Radial-Schulterkugellager, ausgebildet werden,
dass bei beiden Aussenringen (32,38) bezüglich des Rotationslagers (29) nach aussen hin öffnende Innenflächen (33,39) der Aussenringe (32,38) vorgesehen werden und,
dass beim Verfahrensschritt b) zuerst der erste Aussenring (32) und nachfolgend der mit Kugeln (17) versehene, erste Käfig (34) auf die Welle (13) aufgesetzt werden (Fig. 2).

9. Verfahren nach den Ansprüchen 2 und 7,
dadurch gekennzeichnet,
dass beim Verfahrensschritt c) nach dem Verschieben des ersten Aussenringes (16) bis zu dessen Anschlag an die Kugeln (17), dieser Aussenring (16) zum Herstellen eines Laufspiels für die Kugeln (17) um einen kleinen Betrag von seiner Anschlagposition wieder zurückbewegt wird.

10. Verfahren nach den Ansprüchen 4 und 6,
dadurch gekennzeichnet,
dass das Fixieren mindestens des ersten Aussenringes (16,32) beim Verfahrensschritt d) durch Kleben oder Spritzen von Kunststoff oder Metall, gegebenenfalls unter zusätzlicher Verwendung von Ultraschall, erfolgt.

Fig. 1

# Fig. 2

0 289 898

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | CH-A- 514 796 (VEB SPINNEREIMASCHINENBAU KARL-MARX-STADT) * Spalte 3, Zeilen 1-6; Figur 1 * --- | 1,4,6, 10 | D 01 H 7/882 F 16 C 25/06 F 16 C 35/06 F 16 C 35/12 |
| Y | DE-A-3 101 596 (SKF KUGELLAGERFABRIKEN GmbH) * Anpruch 1; Seite 5, Zeile 28 - Seite 6, Zeile 6 * --- | 1,6,4, 10 | |
| A | GB-A-1 604 879 (RANSOME HOFFMANN POLLARD LTD) * Seite 2, Zeilen 25-33 * --- | 2,3,7,8 | |
| A | DE-A-3 148 191 (SKF KUGELLAGERFABRIKEN GmbH) ----- | | |

RECHERCHIERTE SACHGEBIETE (Int. Cl.4)

D 01 H
F 16 C

Der vorliegende Recherchenbericht wurde für alle Patentansprüche erstellt

| Recherchenort | Abschlußdatum der Recherche | Prüfer |
|---|---|---|
| DEN HAAG | 10-06-1988 | HOEFER W.D. |